# EUROPEAN PATENT SPECIFICATION

(11) **EP 2 796 395 B1**
(45) Date of publication and mention of the grant of the patent: **16.10.2019**
(21) Application number: 14001443.2
(22) Date of filing: 22.04.2014
(51) Int. Cl.: B65G 69/00, B60T 3/00

(54) **Device for the blocking of the wheel of a truck at a positioning place near a facade with a loading and unloading platform**
Vorrichtung zum Blockieren des Rades eines Lastkraftwagens auf einer Parkfläche an einer Fassade mit einer Ladebühne
Dispositif pour bloquer la roue d'un camion a un emplacement près d'une façade avec une plate-forme de chargement

(30) Priority: 24.04.2013 NL 1040180; 15.07.2013 NL 1040301
(43) Date of publication of application: 29.10.2014
(73) Proprietor: Hörmann Alkmaar BV, 1800 GC Alkmaar (NL)
(72) Inventor: Stroet, Johannes Franciscus, 1704 WL Heerhugowaard (NL); Van der Zee, Bart, 1871 TC Schoorl (NL)
(74) Representative: Koomen, M.J.I.

(56) References cited:
- WO-A1-95/18029
- DE-C1- 4 401 653
- US-A1- 2002 141 852
- US-A1- 2005 133 315

## Description

The present invention relates to a device for the blocking of the wheel of a truck at a positioning place near a façade provided with a loading and unloading platform, according to the preamble of claim 1.

Such a device is known from DE 44 01 653 C1.

Many goods are transported by truck. During loading and unloading of the truck the truck is parked with its back side against the facade, in which a loading and unloading platform is incorporated. These platforms often are provided with a bridge plate the height of which is adjustable, which permits a fork-lift truck or pallet truck to drive from the platform directly into the truck. During this driving in and out, several times, of a fork-lift truck it is possible that the truck creeps or rolls away from the platform, which causes a dangerous gap between the platform and the loading floor of the truck. Also a driveway with a sloping positioning place can lead to a truck rolling away.

This dangerous situation can be prevented by blocking the truck in the position in front of the platform by the placement of rubber or metal wedges in front of the wheels. It is further known to have the placement of the wedges take place automatically.

Further it is of importance that the truck driver be informed about the status of the blocking device, for instance by means of a traffic light installation, wherein the green light signifies docking or driving away.

From the Dutch patent NL 1022392 is know a device for the blocking of the wheel of a truck at a loading station, which is incorporated in the positioning place and comprises a wedge that can be folded up. A truck that intends to dock drives over the folded down wedge, after which the wedge is positioned against the back side of the wheel of the truck, thereafter folded up, and by means of which the wheel is blocked against rolling away from the platform.

This device has the drawback, that this has to be mounted upon the positioning place, which results in dirt and such like to be difficult to remove from the positioning place concerned.

Such like devices sometimes also are built into the driveway, which can lead to difficulties during snow and ice formation.

The invention aims to provide a device which obviates this drawback. Further the invention aims to provide a device by means of which the positioning of the blocking means in front of the wheel of the truck, that is to be blocked, is facilitated to a large extent.

According to the invention a device is provided for the locking of a wheel of a truck at a positioning place in front of a façade provided with a loading and unloading platform, comprising a guide provided adjacent the positioning place, extending from a road side to a façade side and further comprising a wheel locking means formed by a road side axle, a middle axle and a façade side axle, whereby in between the road side axle and the middle axle a road side arm rotatably is connected, and in between the middle axle and the façade side axle a façade side arm rotatably is connected, whereby the wheel locking means, from a first position, in which the axles and the arms connected therein between lie in a substantially flat line, can be folded out sideward into a second position, in which the axles and the arms relative to each other take up a V-shaped form, while the wheel locking means is positioned relative to the positioning place in such a way, that in the first position the middle axle and the arms substantially lie adjacent the plane of the positioning place, and in the second position these lie substantially above the plane of the positioning place, in such a way, that the façade side arm can lie blocking against a tire of a truck that is present between the façade side arm and the façade, whereby the locking means further comprise a first wagon, moveable in the guide, to which first wagon the road side axle is connected, and further comprise a second wagon, also moveable in the guide and situated in between the first wagon and the façade, to which the façade side axle is connected, and whereby the device is provided with means by which the first wagon is moveable towards the facade and the second wagon, while the second wagon, during movement in the guide is subject to a resistance which is chosen such, that during a movement of the first wagon towards the façade the second wagon in the guide tends to stay in its place in the guide, such that the distance between the first wagon and the second wagon becomes smaller, and by means of which the wheel locking means is forced to folding out into the second position, characterized in that the guide is provided along the side of the positioning place, and the folding out of the wheel locking means from the first position to the second position takes place sideways.

According to a characteristic of the device according to the invention the means, by which the first wagon is moveable towards the façade and the second wagon, are formed by drive means connected to the first wagon.

According to a further characteristic of the device according to the invention
the means by which the first wagon is moveable towards the façade and the second wagon are formed by a member connected to the first wagon that can be manually seized.

According to a characteristic of the device according to the invention the middle axis is provided at its bottom side with a roll, more in particular a roll having a spherical-shaped supporting point.

According to a characteristic of the device according to the invention the wheel locking means is provided with means by which the arms can be rotated from the first position solely in the direction towards the positioning place.

According to another characteristic of the device according to the invention the guide is provided with at least two wheel locking means, located behind each other.

Further characteristics and particulars of the device according to the invention will now be described with reference to the drawings of two examples of embodiments.
Figure 1 shows a perspective view of a loading and unloading platform with shown thereon three positioning places located adjacent each other with each a device according to the invention.
Figure 2 shows a top view, partly in cross-section, of the device according to the invention.
Figure 3 shows a cross-section according to the line A-A of figure 2.
Figure 4 shows a perspective view of a loading and unloading platform with shown thereon three positioning places located adjacent each other with each a further embodiment of the device according to the invention.
Figure 5 shows a top view, partly in cross-section, of the embodiment of the device according to figure 4.
Figure 6 shows a cross-section according to the line A-A of figure 5.
Figure 7 shows a perspective view of a loading and unloading platform with shown thereon three lanes situated adjacent each other with each a further, manual, embodiment of the device according to the invention.
Figure 8 shows a top view, partly in cross-section, of the device according to figure 7.
Figure 9 shows a cross-section according to the line A-A of figure 8.

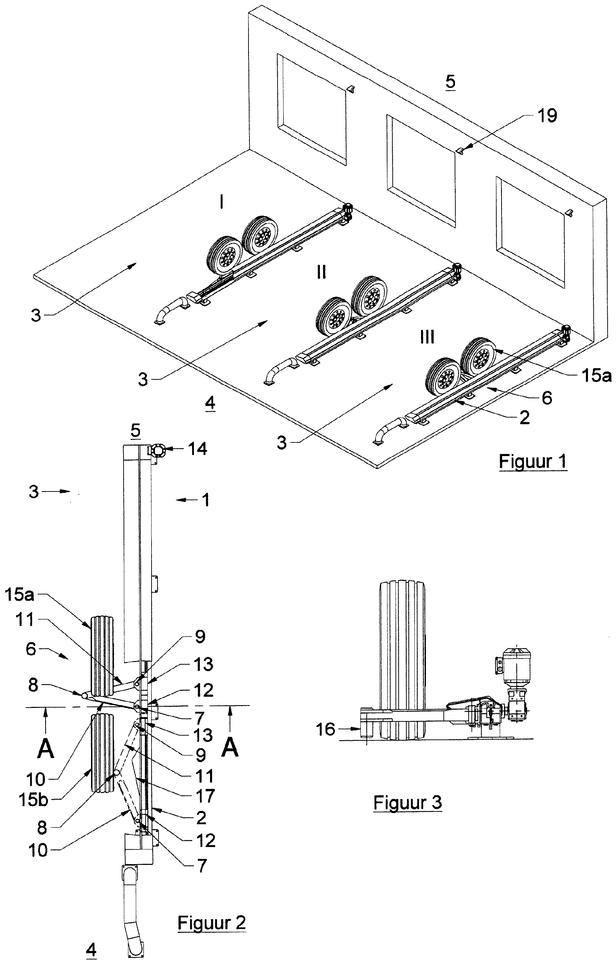

As can be seen in the figures 1, 2 and 3 the device 1 comprises a guide 2 provided adjacent a positioning place 3, extending from a road side 4 to a façade side 5. The device further comprises a wheel locking means 6 formed by a road side axle 7, a middle axle 8 and a façade side axle 9. In between the road side axle 7 and the middle axle 8 a road side arm 10 is rotatably connected. In between the middle axle 8 and the façade side axle 9 a façade side arm 11 is rotatably connected. From a first position, in which the axles 7, 8, 9 and the arms 10, 11 connected therein between lie in a substantially flat line, the wheel locking means 6 can be folded out sideward into a second position, in which the axles 7, 8, 9 and the arms 10, 11 relative to each other take up a V-shaped form. The wheel locking means 6 is positioned relative to the positioning place 3 in such a way, that in the first position the middle axle 8 and the arms 10, 11 substantially lie adjacent the plane of the positioning place 3. In the second position the arms 10, 11 lie substantially above the plane of the positioning place 3. In figure 2 the arms 10, 11 are indicated by uninterrupted line in this second, folded out position. The façade side arm [11] lies blocking against a tire 15a of a truck that is present between the façade side arm 11 and the façade side 5. The wheel locking means 6 further comprise a first wagon 12 moveable in the guide 2, to which the road side axle 7 is connected, and further a second wagon 13, also moveable in the guide 2 and situated in between the first wagon 12 and the façade 5, to which the façade side axle 9 is connected. The first wagon 12 is provided with drive means, in this example of an embodiment a chain (not shown in the drawing) with drive motor 14, by means of which the first wagon 12 can be moved towards the façade 5 and the second wagon 13. The drive means can also be formed by a geared belt or linear motor.

By means of the device the blocking takes place as follows.

A truck is parked on the positioning place in front of the façade with its back side towards the façade for the loading and unloading. By means of the chain (not shown in the drawing) the drive motor 14 pulls the first wagon 12 in the direction of the façade 5. The second wagon 13, during movement in the guide 2 is subject to a resistance, which is chosen such, that during a continued movement of the first wagon 12 towards the façade 5 the second wagon 13 tends to stay in its place in the guide 2. The distance between the first wagon 12 and the second wagon 13 becomes smaller, and the arms 10, 11 are forced to folding out. To advance this folding out, the wheel locking means 6 can be provided with a push-out curve 17 provided between the arms 10, 11 and the guide 2. It is further possible to provide the system with a curve for the forced pushing back of the arms towards the rest or first position. These curves can be necessary depending on the weather conditions (freezing) to secure a reliable operation.
The folding out will take place till the wagons 12, 13 contact each other. In figure 2 this is shown by the arms 10, 11, indicated by the uninterrupted lines, which are in the second, folded out position. When the façade side arm 11 is positioned behind the wheel 15a, the wheel locking means 6 are fixed in a certain position in the guide 2 against movement by locking means (not shown in the drawing), so that the truck cannot roll away.

In figure 1 the device is shown at I in rest, at II in operation, and at III in the second, locking position.

Figure 2 further shows, in the interrupted line, the beginning folding-out movement of the arms 10, 11 from out of the first position to the second position. It can be seen that the wheel 15b is in the way and prevents a complete folding out of the arms 10. In this case the wheel locking means 6 will be pulled along in the guide 2 for just so long as for the arms 10, 11 to do become able to fold out.

The locking device is flexibly connected to the guide 2; unloaded the arms
run free from the road surface, noting that during the pulling along of
the arms roll 16 effects that the resistance remains low. Loaded the arms will rest on the road surface.

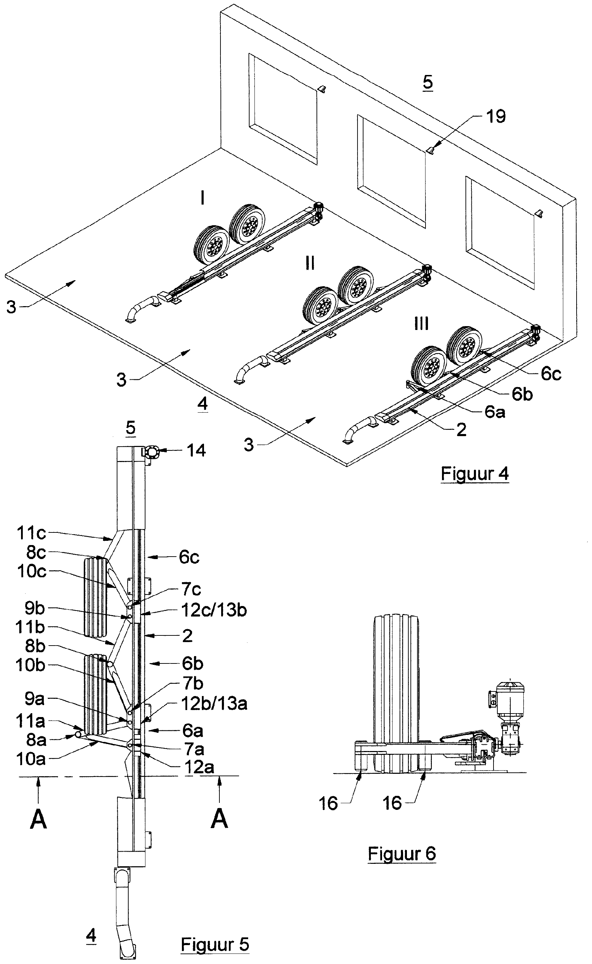

In the figures 4, 5 and 6 a further embodiment is shown, in which the guide 2 is provided with three wheel locking means 6a, 6b and 6c, located behind each other. This system shortens the cycle time; the wheels of the truck are found quicker.

With the embodiment shown in figures 1, 2 and 3 the first wagon 12 is driven. This drive is transmitted by means of the road side axle 7, the road side arm 10 and the middle axle 8 to the façade side arm 11 and the second wagon 13.

With the embodiment shown in figures 4, 5 and 6 the first wagon 12a is connected to the drive means. This drive likewise is transmitted by means of the road side axle 7a, the road side arm 10a and the middle axle 8a to the façade side arm 11a and the second wagon 13a. The second wagon 13a is, in the example of the embodiment shown, formed in one piece with the first wagon 12b that is part of the second wheel locking means 6b, to which this drive is transmitted, and by means of this second wheel locking means 6b and the second wagon 13b to the first wagon 12c that is part of the third wheel locking means 6c.

Figure 5 shows the device at I in rest, at II in operation, and at III in the second, locking position.

It is further possible to provide the system with a surroundings security system 19. In case somebody stays in the area of operation of the locking system this cannot be put into operation.

Further the device, that is to say the guide and the locking device that can be moved along it, is mounted in such a way for there to be a space between the surface of the road and the device. This open bottom side allows dirt to blow through underneath the system, and for dirt not to build up.

Further the system has a low building height, so that there is little chance of damage to the truck and/or the locking system during driving in and out of the truck.

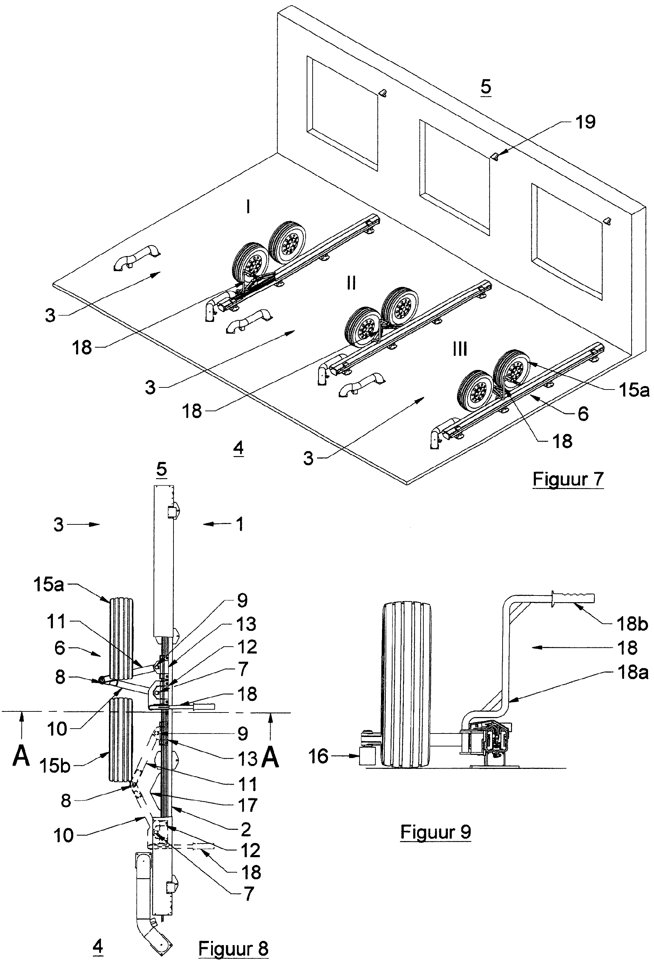

In the figures 7, 8 and 9 a further embodiment is shown.

In the embodiment shown in these figures the means by which the first wagon 12 is moveable towards the façade 5 and the second wagon 13 are formed by a member 18 connected to the first wagon 12 that can be manually seized. In the example shown the member is formed by rod 18a that at one outer end is connected to the first wagon 12 and at the other outer end is provided with a handgrip 18b.

In an advantageous embodiment means are provided by which, by the operation of the manually seizeable member 18, at the same time a locking and unlocking of the wheel locking means relative to the guide can be accomplished.

## Claims

1. Device for the locking of the wheel of a truck at a positioning place [3] in front of a façade provided with a loading and unloading platform, comprising a guide [2] provided adjacent the positioning place [3], extending from a road side [4] to a façade side [5] and further comprising a wheel locking means [6] formed by a road side axle [7], a middle axle [8] and a façade side axle [9], whereby in between the road side axle [7] and the middle axle [8] a road side arm [10] rotatably is connected, and in between the middle axle [8] and the façade side axle [9] a façade side arm [11] rotatably is connected, whereby the wheel locking means [6], from a first position, in which the axles [7, 8, 9] and the arms [10, 11] connected therein between lie in a substantially flat line, can be folded out into a second position, in which the axles [7, 8, 9] and the arms [10, 11] relative to each other take up a V-shaped form, while the wheel locking means [6] is positioned relative to the positioning place [3] in such a way, that in the first position the middle axle [8] and the arms [10, 11] substantially lie adjacent the plane of the positioning place [3], and in the second position these lie substantially above the plane of the positioning place, in such a way, that the façade side arm [11] can lie blocking against a tire [15a] of a truck that is present between the façade side arm [11] and the façade [5], whereby the locking means [6] further comprise a first wagon [12], moveable in the guide [2], to which the road side axle [7] is connected, and further comprise a second wagon [13], also moveable in the guide [2] and situated in between the first wagon [12] and the façade [5], to which the façade side axle [9] is connected, and whereby the device is provided with means by which the first wagon [12] is moveable towards the facade [5] and the second wagon [13], while the second wagon [13], during movement in the guide [2] is subject to a resistance which is chosen such, that during a movement of the first wagon [12] towards the façade [5] the second wagon [13] tends to stay in its place in the guide [2], such that the distance between the first wagon [12] and the second wagon [13] becomes smaller, and by means of which the wheel locking means [6] is forced to folding out into the second position, **characterized in that** the guide [2] is provided along the side of the positioning place [3], and the folding out of the wheel locking means [6] from the first position to the second position takes place sidewards.

2. Device according to claim 1, **characterized in that** the middle axis [8] is provided at its bottom side with a roll [16].

3. Device according to claim 1 or 2, **characterized in that** the wheel locking means [6] is provided with means by which the arms [10, 11] can be rotated from the first position solely in the direction of the lane.

4. Device according to claim 3, **characterized in that** the means are provided by a push-out curve [17] provided between the arms and the guide.

5. Device according to one of the preceding claims, **characterized in that** the guide [2] is provided with at least two wheel locking means [6a, 6b] located behind each other.

6. Device according to claim 1, **characterized in that** at least three wheel locking means [6a, 6b, 6c] are provided.

7. Device according to one of the preceding claims, **characterized in that** locking means are provided by which the wheel locking means can be fixed in any one position against movement in the guide.

8. Device according to one of the preceding claims, **characterized in that** the means, by which the first wagon [12] is moveable towards the façade [5] and the second wagon [13], are formed by drive means connected to the first wagon [12].

9. Device according to claim 1, **characterized in that** the drive means comprise a motor [14] and a chain.

10. Device according to one of the preceding claims, **characterized in that** the means by which the first wagon [12] is moveable towards the façade [5] and the second wagon [13], are formed by a member [18] connected to the first wagon [12] that can be manually seized.

11. Device according to claim 10, **characterized in that** the member [18] is formed by a rod [18a] that at one outer end is connected to the first wagon and at the other outer end is provided with a handgrip [18b].

## Patentansprüche

1. Vorrichtung zum Blockieren des Rades eines Lastkraftwagens an einer Positionierungsstelle [3] vor einer Fassade, die mit einer Be- und Entladeplattform versehen ist, aufweisend eine an die Positionierungsstelle [3] angrenzende Führung [2], die sich von einer Straßenseite [4] zu einer Fassadenseite [5] erstreckt, und ferner aufweisend eine Radblockiervorrichtung [6], die von einer straßenseitigen Achse [7], einer Mittelachse [8] und einer Fassadenseitenachse [9] gebildet wird, wobei zwischen der Straßenseitenachse [7] und der Mittelachse [8] ein Straßenseitenarm [10] drehbar verbunden ist, und zwischen der Mittelachse [8] und der Fassadenseitenachse [9] ein Fassadenseitenarm [11] drehbar verbunden ist, wobei die Radblockiervorrichtung [6] aus einer ersten Position, in der die Achsen [7, 8, 9] und die Arme [10, 11], die zwischen einander verbunden sind, in einer im Wesentlichen flachen Linie liegen, in eine zweite Position ausgeklappt werden können, in der die Achsen [7, 8, 9] und die Arme [10, 11] relativ zueinander eine V-förmige Form annehmen, während die Radblockiervorrichtung [6] relativ zur Positionierungsstelle [3] so positioniert ist, dass in der ersten Position die mittlere Achse [8] und die Arme [10, 11] im Wesentlichen benachbart zur Ebene der Positionierungsstelle [3] liegen und in der zweiten Position diese im Wesentlichen oberhalb der Ebene der Positionierungsstelle liegen, so dass der Fassadenseitenarm [11] gegen einen Reifen [15a] eines Lastkraftwagens, der zwischen dem Fassadenseitenarm [11] und der Fassade [5] vorhanden ist, blockierend liegen kann, wobei die Blockiervorrichtung [6] ferner einen ersten Wagen [12] umfasst, der in der Führung [2] beweglich ist, mit dem die straßenseitige Achse [7] verbunden ist, und ferner einen zweiten Wagen [13] umfasst, der ebenfalls in der Führung [2] beweglich ist und sich zwischen dem ersten Wagen [12] und der Fassade [5] befindet, mit der die Fassadenseitenachse [9] verbunden ist, und wobei die Vorrichtung mit Mitteln versehen ist, mit denen der erste Wagen [12] in Richtung der Fassade [5] und dem zweiten Wagen [13] beweglich ist, während der zweite Wagen [13] bei der Bewegung in der Führung [2] einem Widerstand ausgesetzt ist, der so gewählt ist, dass bei einer Bewegung des ersten Wagens [12] zur Fassade [5] der zweite Wagen [13] dazu neigt, in der Führung [2] an seinem Platz zu bleiben, so dass der Abstand zwischen dem ersten Wagen [12] und dem zweiten Wagen [13] kleiner wird und mittels derer die Radblockiervorrichtung [6] zum Ausklappen in die zweite Position gezwungen wird, **dadurch gekennzeichnet, dass**
die Führung [2] entlang der Seite der Positionierungsstelle [3] bereitgestellt ist und das Ausklappen der Radblockiervorrichtung [6] von der ersten Position in die zweite Position seitlich erfolgt.

2. Vorrichtung nach Anspruch 1, **dadurch gekennzeichnet, dass** die Mittelachse [8] an ihrer Unterseite mit einer Rolle [16] versehen ist.

3. Vorrichtung nach Anspruch 1 oder 2, **dadurch gekennzeichnet, dass** die Radblockiervorrichtung [6] mit Mitteln versehen ist, mit denen die Arme [10, 11] aus der ersten Position nur in Richtung der Fahrspur gedreht werden können.

4. Vorrichtung nach Anspruch 3, **dadurch gekennzeichnet, dass** die Mittel durch eine zwischen den Armen und der Führung vorgesehene Ausstoßkurve [17] bereitgestellt werden.

5. Vorrichtung nach einem der vorhergehenden Ansprüche, **dadurch gekennzeichnet, dass** die Führung [2] mit mindestens zwei hintereinander angeordneten Radblockiervorrichtungen [6a, 6b] versehen ist.

6. Vorrichtung nach Anspruch 1, **dadurch gekennzeichnet, dass** mindestens drei Radblockiervorrichtungen [6a, 6b, 6c] vorgesehen sind.

7. Vorrichtung nach einem der vorhergehenden Ansprüche, **dadurch gekennzeichnet, dass** Blockkiervorrichtungen vorgesehen sind, durch die die Radblockiervorrichtung in jeder beliebigen Position gegen Bewegung in der Führung fixierbar ist.

8. Vorrichtung nach einem der vorhergehenden Ansprüche, **dadurch gekennzeichnet, dass** die Mittel, mit denen der erste Wagen [12] in Richtung der Fassade [5] und des zweiten Wagens [13] beweglich ist, durch mit dem ersten Wagen [12] verbundene Antriebsmittel gebildet werden.

9. Vorrichtung nach Anspruch 1, **dadurch gekennzeichnet, dass** die Antriebsmittel einen Motor [14] und eine Kette umfassen.

10. Vorrichtung nach einem der vorhergehenden Ansprüche, **dadurch gekennzeichnet, dass** die Mittel, mit denen der erste Wagen [12] in Richtung der Fassade [5] und des zweiten Wagens [13] bewegbar ist, von einem mit dem ersten Wagen [12] verbundenen Element [18] gebildet werden, das manuell festgelegt werden kann.

11. Vorrichtung nach Anspruch 10, **dadurch gekennzeichnet, dass** das Element [18] durch einen Stab [18a] gebildet wird, dass an einem äußeren Ende mit dem ersten Wagen verbunden ist und am anderen äußeren Ende mit einem Handgriff [18b] versehen ist.

## Revendications

1. Dispositif pour bloquer la roue d'un camion sur une place de stationnement (3) devant une façade dotée d'une plateforme de chargement et de déchargement, comprenant un guide (2) adjacent à la place de stationnement (3), s'étendant d'un côté route (4) à un côté façade (5) et comprenant en outre un moyen de blocage de roue (6) formé par un axe du côté route (7), un axe central (8) et un axe du côté façade (9), dans lequel un bras du côté route (10) est connecté de manière pivotante entre l'axe du côté route (7) et l'axe central (8) et un bras du côté façade (11) est connecté de manière pivotante entre l'axe central (8) et l'axe du côté façade (9), dans lequel le moyen de blocage de roue (6), à partir d'une première position dans laquelle les axes (7, 8, 9) et les bras (10, 11) connectés entre eux reposent sensiblement à plat, peuvent être pliés dans une seconde position dans laquelle les axes (7, 8, 9) et les bras (10, 11) prennent entre une forme eux de V, tandis que le moyen de blocage de roue (6) est positionné par rapport à la place de stationnement (3) de telle manière que, dans la première position, l'axe central (8) et les bras (10, 11) sont sensiblement adjacents au plan de la place de stationnement (3) et, dans la seconde position, sont sensiblement au-dessus du plan de la place de stationnement, de telle manière que le bras du côté façade (11) peut se bloquer contre un pneu (15a) d'un camion qui est présent entre le bras du côté façade (11) et la façade (5), et dans lequel le moyen de blocage (6) comprend en outre un premier chariot (12), pouvant se mouvoir dans le guide (2), auquel l'axe du côté route (7) est connecté, et comprend également un second chariot (13), pouvant aussi se mouvoir dans le guide (2) et situé entre le premier chariot (12) et la façade (5), auquel l'axe du côté façade (9) est connecté, ce dispositif étant doté de moyens par lesquels le premier chariot (12) peut se mouvoir vers la façade (5) et le second chariot (13), tandis que le second chariot (13), pendant le mouvement dans le guide (2), est soumis à une résistance qui est choisie de sorte que, pendant un mouvement du premier chariot (12) vers la façade (5), le second chariot (13) tend à rester à sa place dans le guide (2), de sorte que la distance entre le premier chariot (12) et le second chariot (13) se réduit, et par le biais desquels le moyen de blocage de roue (6) est forcé de se déplier dans la seconde position, **caractérisé en ce que** le guide (2) est disposé le long du côté de la place de stationnement (3) et le dépliage du moyen de blocage de roue (6) de la première position à la seconde position se fait vers l'intérieur.

2. Dispositif selon la revendication 1, **caractérisé en ce que** l'axe central (8) est doté d'un rouleau (16) sur son côté inférieur.

3. Dispositif selon la revendication 1 ou 2, **caractérisé en ce que** le moyen de blocage de roue (6) est doté de moyens par lesquels les bras (10, 11) peuvent pivoter à partir de la première position uniquement dans la direction de la voie.

4. Dispositif selon la revendication 3, **caractérisé en ce que** les moyens sont dotés d'une courbe d'évacuation (17) disposée entre les bras et le guide.

5. Dispositif selon une des revendications précédentes, **caractérisé en ce que** le guide (2) est doté d'au moins deux moyens de blocage de roue (6a, 6b) situés l'un derrière l'autre.

6. Dispositif selon la revendication 1, **caractérisé en ce qu'**il dispose d'au moins trois moyens de blocage de roue (6a, 6b, 6c).

7. Dispositif selon une des revendications précédentes, **caractérisé en ce qu'**il dispose de moyens de blocage par lesquels les moyens de blocage de roue peuvent être fixés dans n'importe quelle position et empêchés de se mouvoir dans le guide.

8. Dispositif selon une des revendications précédentes, **caractérisé en ce que** les moyens par lesquels le premier chariot (12) peut se mouvoir vers la façade (5) et le second chariot (13) sont formés par des moyens d'entraînement connectés au premier chariot (12).

9. Dispositif selon la revendication 1, **caractérisé en ce que** les moyens d'entraînement comprennent un moteur (14) et une chaîne.

10. Dispositif selon une des revendications précédentes, **caractérisé en ce que** les moyens par lesquels le premier chariot (12) peut se mouvoir vers la façade (5) et le second chariot (13) sont constitués par un élément (18) connecté au premier chariot (12) qui peut être saisi manuellement.

11. Dispositif selon la revendication 10, **caractérisé en ce que** l'élément (18) est constitué par une tige (18a) qui est connectée au premier chariot à une extrémité extérieure et qui est dotée d'une poignée (18b) à l'autre extrémité extérieure.
